# EUROPEAN PATENT APPLICATION

(11) **EP 1 167 786 A1**
(43) Date of publication of application: **02.01.2002**
(21) Application number: 00939088.1
(22) Date of filing: 16.06.2000
(51) Int. Cl.: F16C 11/10, H04M 1/02

(54) **HINGE**

(30) Priority: 31.01.2000 JP 2000023146; 31.03.2000 JP 2000100010
(71) Applicant: Mizuki Seimitsu Co., Ltd., Ota-ku, Tokyo 146-0081 (JP)
(72) Inventor: YAMADA, Akira, c/o Mizuki Seimitsu Co., Ltd., Ohta-ku, Tokyo 146-0081 (JP); YOSHIGASHIMA, Yutaka,Mizuki Seimitsu Co., Ltd., Ohta-ku, Tokyo 146-0081 (JP)
(74) Representative: Herzog, Markus, Dipl.-Phys. Dr.
(86) International application number: PCT/JP00/03962
(87) International publication number: WO 01/57407

(57) **Abstract**

The present invention relates to a hinge acting a specified braking force in operation of pivotally moving two flap bodies. The hinge comprises a bearing body 1, which has, at its outer part, mounting parts 11 for a first flap body 5 and also a wear-resistant inner surface having slider holding parts 10,10 at positions spaced at an interval of a specified angle on the same circumference of the inner surface part, a shaft 2, which has, at one end, mounting parts 21 for a second flap body 6, is inserted into the bearing body 1 in an anti-slipped state so as to be capable of relative turning, and also has a spring housing hole 20 opened to one part of the outer surface part so as to pass through an orbit crossing at right angles with an axial core and including the slider holding part 10 at the time of relative turning, a coil spring 3, which is inserted into the spring housing hole 20, and a slider 4, which is energized by the coil spring 3 so as to be pushed out from the spring housing hole 20 in the circumferential direction.

## Description

### TECHNICAL FIELD

This invention generally relates to a hinge.

More specifically, the present invention relates to a hinge having functions of acting a specified braking force in pivotally unfolding or folding operation of two flap bodies such that the two flap bodies, when pivotally unfolded at a specified angle from or folded over each other, are clicked to stop their pivotal motion, and applying a specified force or more in the direction of pivotal motion of the flap bodies in the clicked state allows the flap bodies to release from the clicked state, like a hinge for connecting a transmitter-side casing and a receiver-side casing of a folding portable mobile telephone together, for instance.

### BACKGROUND ART

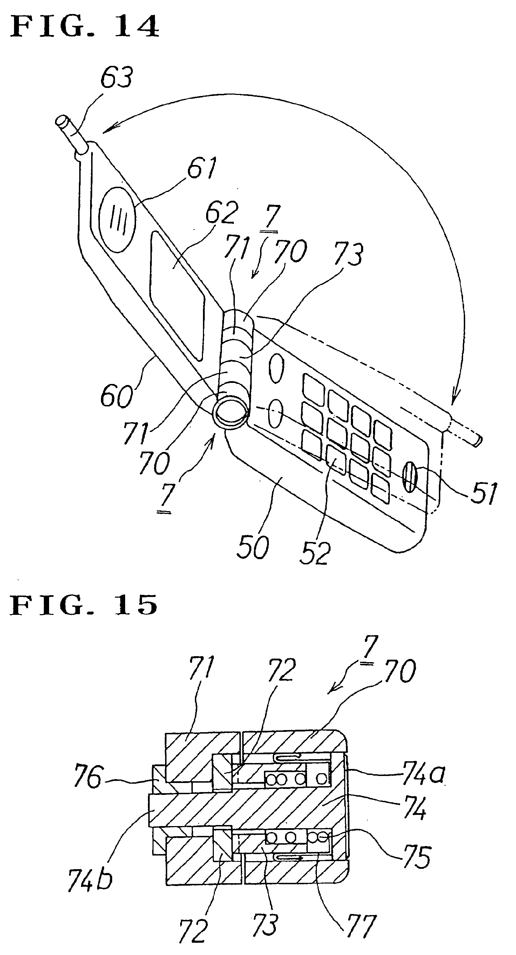

A portable mobile telephone as shown in Fig. 14 is disclosed in Japanese Patent Laid-open No. 11-68901, and a hinge as shown in Fig. 15 is used for this portable mobile telephone.

The portable mobile telephone shown in Fig. 14 is composed of a transmitter-side casing 50 having a transmitter part 51 and operation keys 52 and a receiver-side casing 60 having a receiver part 61, a display part 62 and an antenna 63. The casings 50 and 60 are connected together through a pair of hinges 7, 7.

Each hinge 7 has cylindrical conductive bearing parts 70, 71 axially placed in parallel to each other, and one bearing part 70 is connected to the transmitter-side casing 50, while the other bearing part 71 is connected to the receiver-side casing 60. Reference numeral 73 denotes a connector cover.

A ring-like friction-bearing member 72 made of metal is fixedly mounted to the inside of the bearing part 71, as shown in Fig. 15. This friction-bearing member 72 is in contact with an end of a cylindrical friction member 73 made of metal in the bearing part 70 slidably in the turning direction.

A shaft 74 having a flanged spring seat 74a also serving as a cover at its base end and a bolt part 74b at its tip end is inserted into both the bearing parts 70, 71 through one bearing part 70. A spring 75 is mounted to the base end of the shaft 74. In addition, the spring 75 is compressed by tightening the bolt part 74b of the shaft 74 with a nut 76 through an open end of the other bearing part 71 to press the friction member 73 against the friction-bearing member 72 for a braking operation.

Reference numeral 77 denotes a cylindrical flat spring also serving as a spring seat. The tip end of the flat spring 77 is in contact with the outer surface of the friction member 73 and the inner surface of the bearing part 70 slidably, providing conduction of frame earth in the casing.

In the above hinge, the friction-bearing member 72 and the friction member 73 are in surface-contact with each other under a specified pressure by the energizing action of the spring 75. Thus, the casing 60, when folded over or unfolded from the casing 50, is braked by a specified force through friction between the friction-bearing member 72 and the friction member 73.

Further, the slide surfaces of the friction-bearing member 72 and the friction member 73 have uneven parts having taper surfaces in the turning direction at positions spaced at an interval of a specified angle (160 to 180 degrees). Thus, when the casings 50, 60 are unfolded from each other by a specified angle, the uneven parts are engaged with each other for clicking the casings. Moving the casing 50 pivotally about the casing 60 in the folding direction by a specified force or more allows the casings to release from the clicked state for folding the casings over each other. Then, the uneven parts are engaged again with each other in the casing folded state for clicking the casings.

Since the hinge in the above prior art acts the pressure of the spring 75 in the axial direction, a contacting part between the friction-bearing member 72 and the friction member 73 in the turning direction is structurally limited to a small length, resulting in the need for a larger-sized spring to allow the hinge to act a sufficient braking force in the direction of pivotal motion. However, since the bearing part 70 having an outer diameter of 7 mm or less is used in most case, a large-sized spring is not available for the above hinge.

Although a means of increasing the number of springs is also supposed to meet a demand for higher braking force of the friction member, the structure of the above hinge fails to mount a plurality of springs (two springs, for instance) structurally.

It is an object of the present invention to provide a hinge, which may act the pressure of a spring in the direction of pivotal motion of flap bodies more efficiently by increasing the contacting length of a friction part in the turning direction structurally.

### DISCLOSURE OF THE INVENTION

A hinge according to the present invention has the following structure for attaining the above object.

That is, a hinge in the first mode according to the present invention comprises a bearing body, which has, at its outer part, mounting parts for a first flap body and also a wear-resistant inner surface having slider holding parts at positions spaced at an interval of a specified angle on the same circumference of an inner surface part; a shaft, which has, at its one end, mounting parts for a second flap body, is inserted into the bearing body in an anti-slipped state so as to be capable of relative turning, and also has a spring housing hole having one end opened to an outer surface part so as to pass through an orbit crossing at right angles with an axial core and including the slider holding part at the time of relative turning; a coil spring, which is inserted into the spring housing hole; and a slider, which is energized by the coil spring so as to be pressed against the inner surface of the bearing body through the spring housing hole, has wear-resistance at least at the tip end making contact with the inner surface of the bearing body, and is capable of engagement with or disengagement from the slider holding part when the bearing body is turned relatively to the shaft.

In the hinge according to the first mode, a hinge in a second mode according to the present invention is characterized in that the slider has a spring guide pin for mounting the coil spring so as to be externally fitted to the guide pin.

In the hinge according to the first mode, a hinge in a third mode according to the present invention is characterized in that a hard ball is used as the slider.

In the hinge according to the first mode, a hinge in a fourth mode according to the present invention is characterized in that a hard roller having an axis placed in parallel to an axis of the shaft is used as the slider.

In the hinge according to the second mode, a hinge in a fifth mode according to the present invention is characterized in that the slider has a semicircular section orthogonal to the axial direction of the tip end making contact with the inner surface of the bearing body, and makes contact with the inner surface of the bearing body in a part other than the slider holding parts continuously over a specified length in the axial direction.

In the hinge according to the first, second or fifth mode, a hinge in a sixth mode according to the present invention is characterized in that a contacting part of the slider with the coil spring is formed in the shape of a plane.

In the hinge according to any one of the second to sixth modes, a hinge in a seventh mode according to the present invention is characterized in that the slider holding part is formed in the shape of a hole opened to an outer circumference.

In the hinge according to the seventh mode, a hinge in an eighth mode according to the present invention is characterized in that the pair of slider holding parts include a plurality of pairs of slider holding parts axially formed so as to be located in the same circumferential direction, the spring housing hole includes a plurality of spring housing holes axially formed so as to face in the same circumferential direction correspondingly to the slider holding parts, and the coil spring and the slider are housed in each spring housing hole.

In the hinge according to any one of the second to sixth modes, a hinge in a ninth mode according to the present invention is characterized in that the slider holding part is formed in the shape of an axial groove on the inner surface of the bearing body 1.

In the hinge according to the ninth mode, a hinge in a tenth mode according to the present invention is characterized in that the groove formed as the slider holding part has a concave semicircular section.

In the hinge according to the ninth or tenth mode, a hinge in an eleventh mode according to the present invention is characterized in that the spring housing hole includes a plurality of spring housing holes axially formed so as to face in the same circumferential direction, and the coil spring and the slider are housed in each spring housing hole.

In the hinge according to the fifth mode, a hinge in a twelfth mode according to the present invention is characterized in that the slider holding part is formed in the shape of a groove having a concave semicircular section, the spring housing hole includes a plurality of spring housing holes axially formed so as to face in the same circumferential direction, the coil spring is housed in each spring housing hole, the slider has an axial length enough to extend across the spring housing holes, and the spring housing holes are communicated with each other through each one end opened in the circumferential direction to such an extent that the tip end of the slider is hidden when being in contact with a part of the bearing body other than the slider holding parts.

In the hinge according to the twelfth mode, a hinge in a thirteenth mode according to the present invention is characterized in that the contacting part of the slider with the coil spring is formed in the shape of a plane.

In the hinge according to any one of the first to thirteenth modes, a hinge in a fourteenth mode according to the present invention is characterized in that the bearing body is composed of a synthetic resin body and a metal interior sheet 1b fixedly mounted to the inner surface of the body.

In the hinge according to any one of the first to fourteenth modes, a hinge in a fifteenth mode according to the present invention is characterized in that a transmitter-side casing of a portable mobile telephone is mounted to one of the first and second flap bodies, while a receiver-side casing of the portable mobile telephone is mounted to the other, and the bearing body and the shaft have conductivity.

### BRIEF DESCRIPTION OF THE DRAWINGS

Fig. 1 is a sectional view showing a hinge in a first embodiment according to the present invention;
Fig. 2 is a sectional view taken along line A-A indicated by arrows in Fig. 1;
Fig. 3 is a sectional view taken along line B-B indicated by arrows in Fig. 1:
Fig. 4 is an exploded perspective view showing an essential part of the hinge in Fig. 1;
Fig. 5 is an exploded perspective view showing an essential part of a hinge in a second embodiment according to the present invention;
Fig. 6 is a sectional view showing a hinge in a third embodiment according to the present invention;
Fig. 7 is a sectional view showing a hinge in a fourth embodiment according to the present invention;
Fig. 8 is a sectional view taken along line C-C indicated by arrows in Fig. 7;
Fig. 9 is an exploded perspective view showing an essential part of the hinge in Fig. 7;
Fig. 10 is an exploded perspective view showing an essential part of a hinge in a fifth embodiment according to the present invention;
Fig. 11 is a sectional view showing an essential part of the hinge in Fig. 10;
Fig. 12 is a sectional view showing a hinge in a sixth embodiment according to the present invention;
Fig. 13 is a sectional view taken along line D-D indicated by arrows in Fig. 12;
Fig. 14 is a perspective view showing a portable mobile telephone in the prior art; and
Fig. 15 is an enlarged sectional view showing a hinge used for the portable mobile telephone in Fig. 14.

### BEST MODE OF EMBODYING THE INVENTION

Hereinafter will be described a hinge in preferred embodiments according to the present invention with reference to the accompanying drawings.

### First embodiment

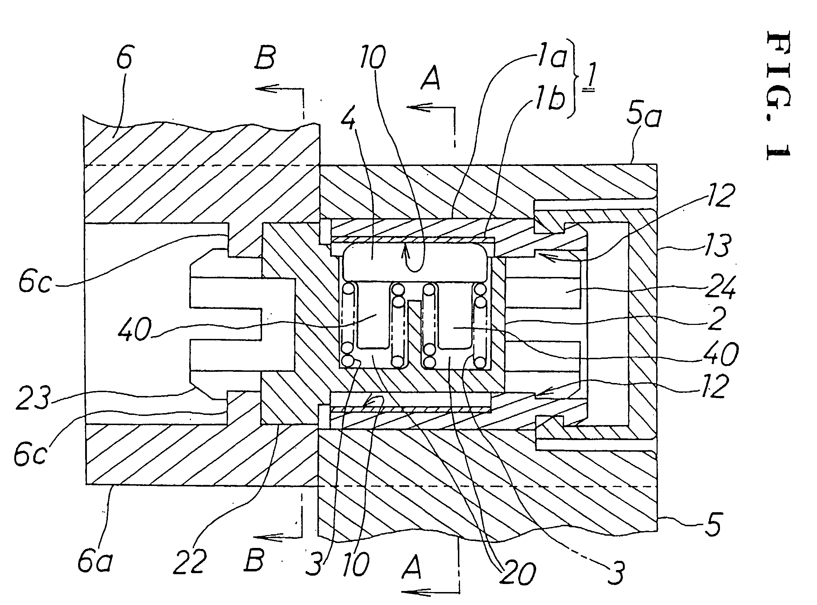

In Figs. 1 to 4, reference numeral 1 denotes a bearing body having, at its outer surface part, mounting parts 11 for a first flap body 5, and the bearing body 1 is formed in a cylindrical shape as a whole and has conductivity. The bearing body 1 has a wear-resistant inner surface, and an inner surface part of the bearing body 1 has slider holding parts 10, 10 in the shape of an axial groove having a concave semicircular section at an interval of a specified angle (180 degrees in this embodiment) on the same circumference.

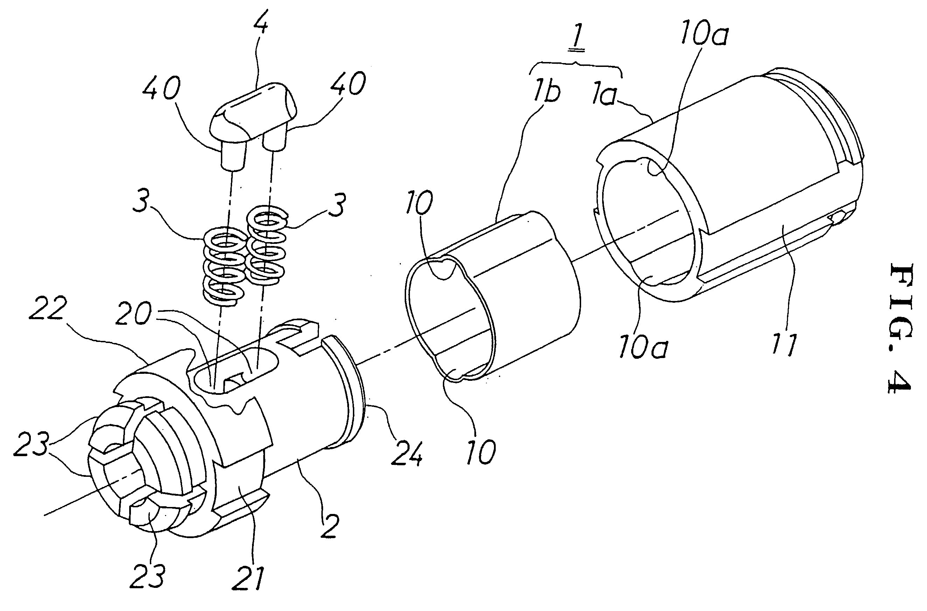

The bearing body 1 is composed of a body 1a made of hard synthetic resin such as polyacetal having conductivity and an interior sheet 1b formed by a metal cylinder fixedly mounted in the inserted state to the inner surface of the body. The interior sheet 1b has the groove-shaped slider holding parts 10, 10 at symmetrical positions, while the inner surface part of the body 1a has grooves 10a, 10a (See Fig. 4), to which the slider holding parts 10, 10 are fitted. The interior sheet 1b is made of a thin stainless steel material subjected to drawing into a cylindrical shape with a progressive press.

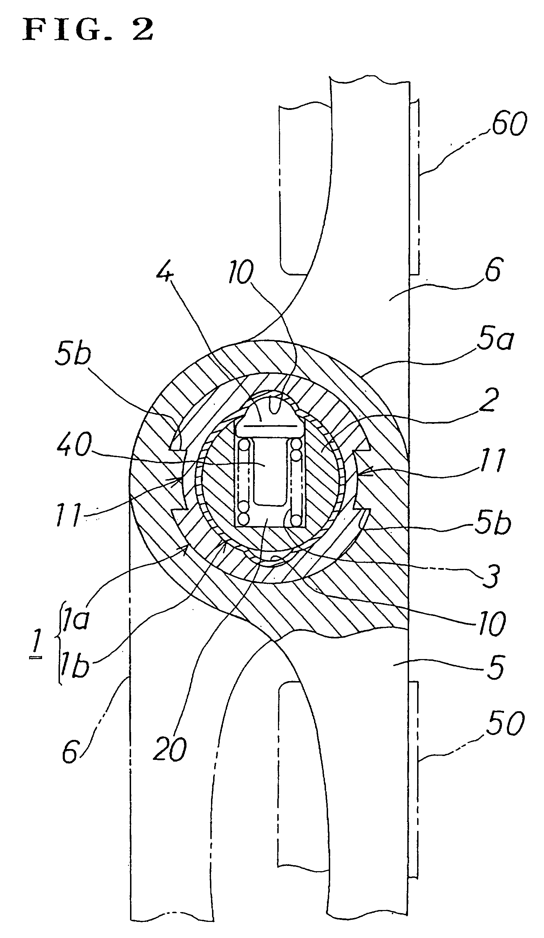

As shown in Figs. 2 and 4, each mounting part 11 is formed in the shape of an axial groove on the outer surface of the bearing body 1. The bearing body 1 and the first flap body 5 are constituted to turn in one body by fitting axial projections 5b formed on the inner surface part of a cylindrical part 5a of the first flap body 5 as shown in Fig. 2 into the groove-shaped mounting parts 11.

Reference numeral 2 denotes a shaft made of hard synthetic resin such as polyacetal having conductivity. One end of the shaft 2 has a flange 22, and a shaft part other than the flange 22 is inserted into the bearing body 1 in an anti-slipped state so as to be capable of relative turning.

In the first embodiment, the end of the shaft 2 has a holding projection 24 circumferentially divided into four parts through axial slots for mounting the shaft 2 to the bearing body 1 in the anti-slipped state by press-fitting the holding projection 24 into the bearing body 1 and also holding the holding projection with a circumferential step part 12 (See Fig. 1) formed at the end of the bearing body 1.

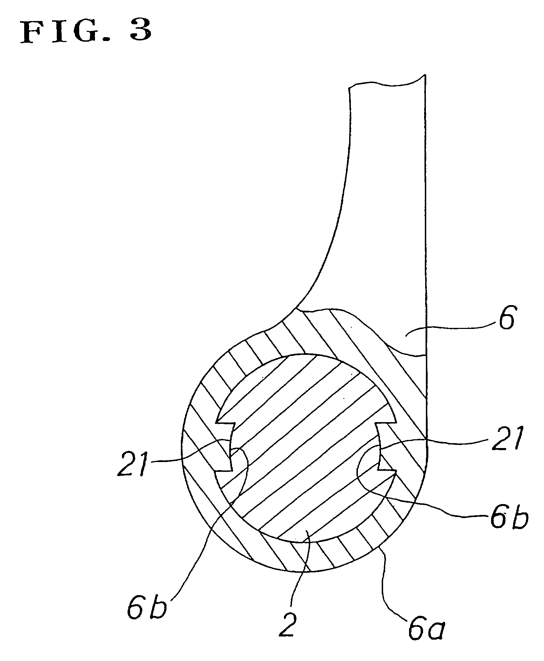

The flange 22 of the shaft 2 has mounting parts 21 for a second flap body 6. As shown in Figs. 3 and 4, each mounting part 21 is formed in the shape of an axial groove on the flange 22. The shaft 2 and the second flap body 6 are constituted to turn in one body by fitting projections 6b formed on the inner surface part of a cylindrical part 6a of the second flap body 6 into the groove-shaped mounting parts 21.

The end of the flange 22 has a holding projection 23 divided into four parts through axial slots for mounting the shaft 2 to the cylindrical part 6a of the second flap body 6 in the anti-slipped state by holding the holding projection 23 with a circumferential inner flange 6c formed on the cylindrical part 6a of the second flap body 6, as shown in Fig. 1.

Reference numeral 13 denotes a cap made of synthetic resin, and this cap 13 is fitted to the outside end of the bearing body 1.

An inserted part of the shaft 2 into the bearing body 1 has a spring housing hole 20 having one end opened in the circumferential direction so as to pass through an orbit crossing at right angles with the axial core and including the slider holding part 10 of the bearing body 1 at the time of relative turning. The spring housing hole 20 is formed in two locations in parallel to each other in the axial direction correspondingly to the slider holding parts 10. A coil spring 3 (a piano wire is used in this embodiment) is housed in each spring housing hole 20. These coil springs 3 energize a slider 4 made of wear-resistant metal so as to be pushed out from the spring housing holes 20 in the circumferential direction.

The tip end of the slider 4 making contact with the inner surface of the bearing body 1 has a semi-circular section orthogonal to the axial direction and is constituted to make contact with the inner surface of the bearing body 1 continuously over a specified length in the axial direction. A contacting part of the slider 4 with the coil spring 3 is formed in the shape of a plane, and a pair of pins 40, 40 for guiding the coil springs 3 so as to be externally fitted thereto are integrally formed on the plane.

Since the slider 4 has an axial length enough to extend across two spring housing holes 20, the spring housing holes 20 are communicated with each other through each one end opened in the circumferential direction to such an extent that the tip end of the slider 4 is hidden when being in contact with the part of the bearing body 1 other than the slider holding parts 10.

A material of the slider 4 includes chromemolybdenum steel or nickel-chromemolybdenum steel, and a metal injection molding process (MIM) is applied to form the slider 4.

Two sets of hinges according to the first embodiment are required for a folding portable mobile telephone, for instance. A transmitter-side casing 50 of the portable mobile telephone is mounted to the first flap body 5, while a receiver-side casing 60 of the portable mobile telephone is mounted to the second flap body 6.

The hinge according to the first embodiment is assembled according to the following procedure.

Firstly, the bearing body 1 is assembled as described the above, and the slider 4 is inserted into the spring housing holes 20 of the shaft 2 in such a way as to simultaneously insert the pins 40, 40 into the coil springs 3 downward, after insertion of the coil springs 3 into the spring housing holes 20. The shaft 2 in this state is forced in the bearing body 1, and the cap 13 is fitted to the outside end of the bearing body 1. Since the tip end of the shaft 2 has the holding projection 24, the shaft 2 is forced in the bearing body 1 in a press-fitted state. Then, the holding projection 24 is held with the step part 12 in the stage of completion of press-fitting of the shaft 2 in the bearing body 1 for uniting the bearing body 1, the shaft 2, the coil springs 3 and the slider 4 in a body.

The hinge in this state is supplied to a portable mobile telephone manufacturing factory. The hinge assembled as described the above is mounted to the portable mobile telephone at the factory such that the bearing body 1 is placed in the cylindrical part 5a of the first flap body 5, while the flange 22 of the shaft 2 is placed in the cylindrical part 6a of the second flap body 6.

According to the hinge in the first embodiment, the slider 4 is pressed under the specified pressure by the coil springs 3 against the inner surface of the bearing body 1 in line-contact therewith when the second flap body 6 is moved pivotally about the first flap body 5, for instance, the second flap body 6 is braked. When the tip end of the slider 4 reaches the slider holding part 10, the slider is held with the slider holding part 10, and the second flap body 6 is clicked to stop its pivotal motion. When the flap body 6 is allowed to move pivotally in the reverse direction by a specified force or more, the slider gets away from the slider holding part 10 to release the second flap body 6 from the clicked state. Then, the second flap body 6 is moved pivotally in the direction of restoration while being braked under the specified pressure until the tip end of the slider 4 is held with the opposite slider holding part 10 for clicking the second flap body 6 with the first flap body 5.

According to the hinge in the first embodiment, firstly, the friction part in the turning direction is constituted by the tip end of the slider 4 and the inner surface of the bearing body 1, permitting an increase in friction part length structurally. Thus, the hinge in the first embodiment may act the pressure of the coil springs 3 in the direction of pivotal motion of the flap bodies more efficiently.

Secondly, since the hinge in the first embodiment is structured to act the pressure of the coil springs 3 to the inner surface of the bearing body 1 through the slider 4, there is an advantage to using a plurality of springs for more increase in braking force and clicking force.

Thirdly, since the tip end of the slider 4 and the inner surface of the bearing body 1 are axially in line-contact with each other, the slide motion of the tip end of the slider 4 along the inner surface of the bearing body 1 becomes stable, and wear between the tip end of the slider 4 and the inner surface of the bearing body 1 is restrained.

Fourthly, since the slider 4 has the pins 40 for guiding the coil springs 3 so as to be externally fitted thereto, the operation of the coil springs 3 becomes more stable.

Fifthly, since the contacting part of the slider 4 with the coil springs 3 is formed in the shape of the plane, the operation of the coil springs 3 becomes much more stable.

### Second embodiment

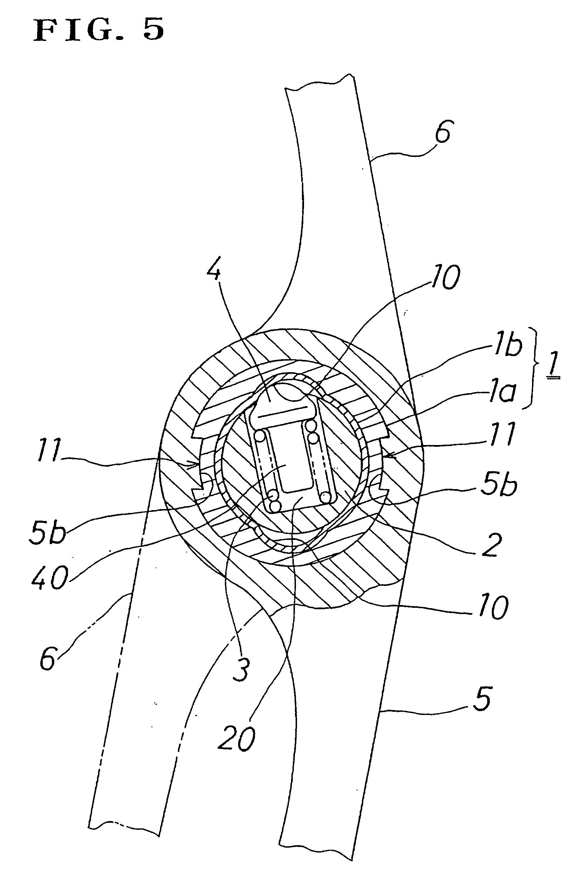

A description will now be given of a hinge in the second embodiment according to the present invention with reference to Fig. 5.

The folding portable mobile telephone includes a structure having an appropriate stopper mechanism (not shown) for limiting the permissible pivotal motion of the second flap body 6 about the first flap body 5 to the range (160 degrees) from the position shown by a solid line to the position shown by a chain double-dashed line in the drawing, for instance.

In the portable mobile telephone of the above structure, it is preferable that slider holding parts 10, 10 of a greater width are formed at completely symmetrical positions on the inner surface of the bearing body 1 as shown in Fig. 5, so that the second flap body 6 is clicked with the first flap body 5 simultaneously with the operation of the above stopper mechanism when a part of the tip end of the slider 4 makes contact with a side wall part of the slider holding part 10 on this side of the slide direction.

The reason is that adjustment of the click position and the operating position of the stopper mechanism is simplified, and besides, the pair of slider holding parts 10, 10 formed at the completely symmetrical positions are better than those formed at an angular interval of 160 degrees for easy formation of a small-sized cylindrical interior sheet 1b.

Other constitution, operation and effects of the hinge in the second embodiment are similar to those of the hinge in the first embodiment, and hence, their description will be omitted. Third embodiment

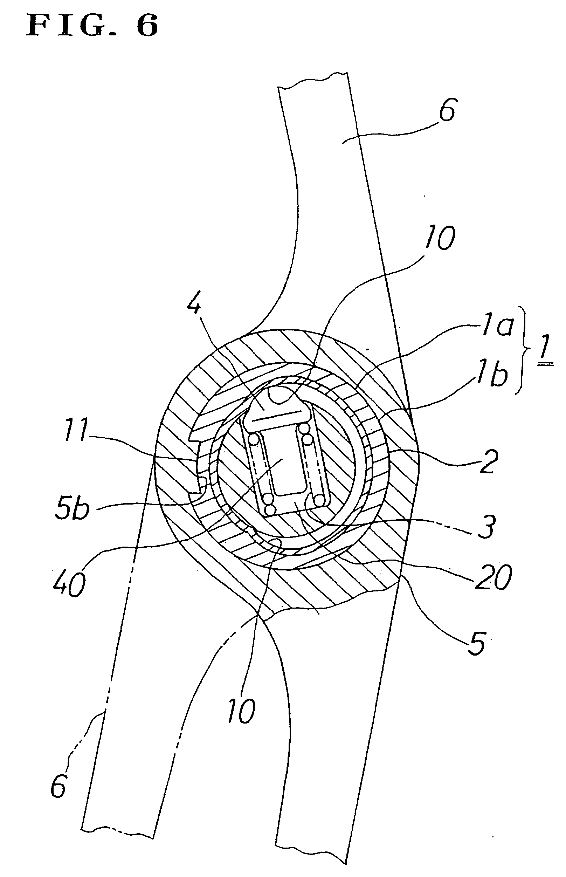

A description will now be given of a hinge in the third embodiment according to the present invention with reference to Fig. 6.

According to the hinge in the third embodiment, the groove-shaped slider holding parts 10, 10 of the hinge (See Fig. 5) in the second embodiment are modified into a circumferentially continuous shape in a part which is outside the range of pivotal motion of the second flap body 6.

The hinge having the above structure is also operated similarly to the hinge in the second embodiment.

Other constitution, operation and effects of the hinge in the third embodiment are similar to those of the hinge in the second embodiment, and hence, their description will be omitted.

### Fourth embodiment

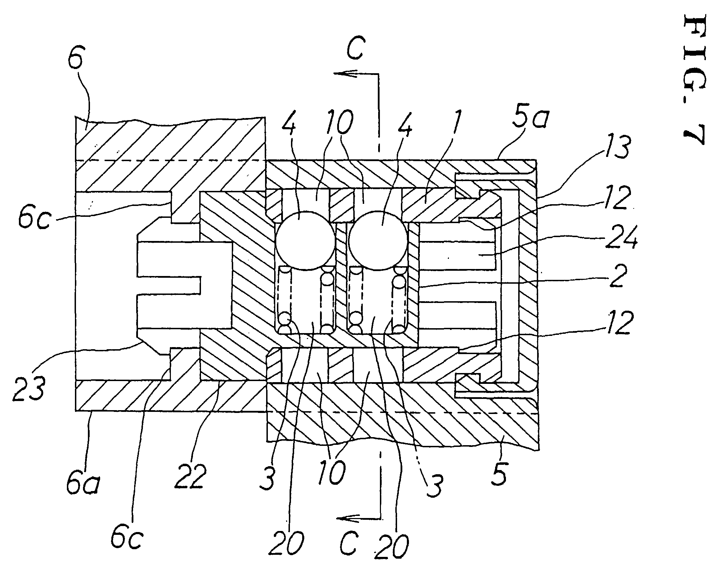

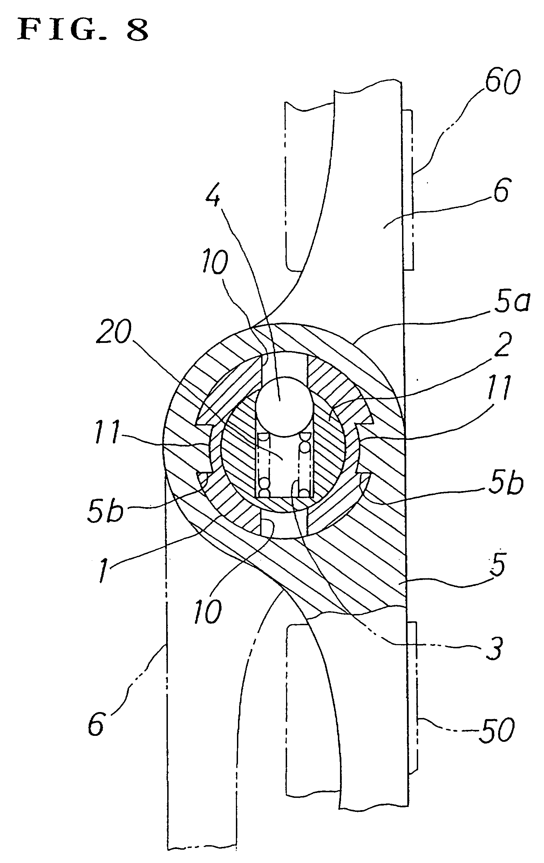

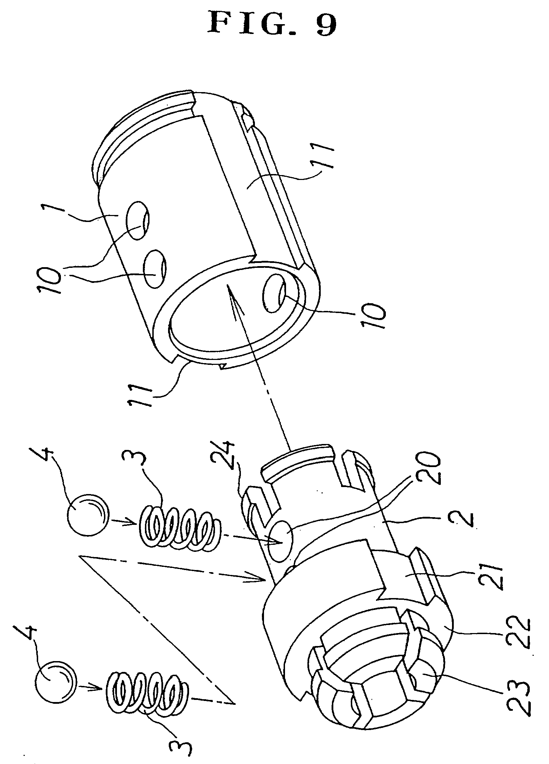

A description will now be given of a hinge in the fourth embodiment according to the present invention with reference to Figs. 7 to 9.

Reference numeral 1 denotes a bearing body made of metal such as steel and stainless steel and having, at its outer part, mounting parts 10 for a first flap body 5, and the bearing body 1 is formed in a cylindrical shape as a whole and has conductivity. When steel is used for the material of the bearing body 1, a carbonitriding process is preferably required to provide higher wear-resistance for the inner surface of the bearing body.

The inner surface part of the bearing body 1 has slider holding parts 10, 10 in the shape of a circular hole, which is opened in the circumferential direction and is slightly smaller in diameter than a slider 4 formed by a ball as will be described later, at positions spaced at an interval of a specified angle (180 degrees also in this embodiment) on the same circumference.

In the fourth embodiment, the slider holding parts 10, 10 are formed in two locations in the axial direction respectively.

Reference numeral 2 denotes a shaft made of synthetic resin having conductivity. One end of the shaft 2 has a flange 22, and a shaft part other than the flange 22 is inserted into the bearing body 1 in the anti-slipped state so as to be capable of relative turning.

The inserted part of the shaft 2 into the bearing body 1 has a spring housing hole 20 having one end opened to an outer' surface part so as to pass through an orbit crossing at right angles with the axial core and including the slider holding parts 10 of the bearing body 1 at the time of relative turning. The spring housing hole 20 is formed in two locations in parallel to each other in the axial direction correspondingly to the slider holding parts 10. A coil spring 3 (a piano wire is used in this embodiment) is housed in each spring housing hole 20. These coil springs 3 energize the sliders 4 respectively formed by steel balls so as to be pushed out from the spring housing holes 20 in the circumferential direction.

The hinge in the fourth embodiment is substantially similar in constitution of other parts to the hinge in the first embodiment.

The hinge in the fourth embodiment is assembled according to the following procedure.

Firstly, the coil springs 3 and the sliders 4 are housed in the spring housing holes 20 of the shaft 2 respectively to force the shaft 2 in this state in the bearing body 1, and the cap 13 is fitted to the outside end of the bearing 1. Since the tip end of the shaft 2 has the holding projection 24, the shaft 2 is forced in the bearing body 1 in the press-fitted state. Then, the holding projection 24 is held with the step part 12 in the stage of completion of press-fitting of the shaft 2 in the bearing body 1 for uniting the bearing body 1, the shaft 2, the coil springs 3 and the sliders 4 in one body.

The hinge assembled as described the above is mounted to the portable mobile telephone such that the bearing body 1 is placed in the cylindrical part 5a of the first flap body 5, while the flange 22 of the shaft 2 is placed in the cylindrical part 6a of the second flap body 6.

According to the hinge in the fourth embodiment, since each slider 4 formed by the ball is pressed under a specified pressure by the coil spring against the inner surface of the bearing body 1 in point-contact therewith when the second flap body 6 is moved pivotally about the first flap body 5, the second flap body is braked. When the part of each slider 4 reaches the slider holding part 10, each slider 4 is held in the fitted state with the slider holding part 10, and the flap body 6 is clicked to stop its pivotal motion. When the flap body 6 is allowed to move pivotally in the reverse direction by the specified force or more, each slider 4 gets away from the slider holding part 10 to release the second flap body 6 from the clicked state. Then, the flap body 6 is moved pivotally in the direction of restoration while being braked under the specified pressure until each slider 4 is held with the opposite slider holding part 10 in the fitted state for clicking the flap body 6 with the flap body 5.

The hinge in the fourth embodiment is slightly different from the hinge in the first embodiment in operation, including the slide motion of the sliders 4 along the inner surface of the bearing body 1 in the state of point-contact. However, the hinge in the fourth embodiment is similar to the hinge in the first embodiment in advantages in that the length of the slide friction part between the slider 4 and the bearing body 1 may be increased structurally to thereby act the elastic force of the coil spring in the direction of pivotal motion of the flap bodies more efficiently and a plurality of springs may be used for more increase in braking force and clicking force.

In the hinge in the fourth embodiment, the pin for guiding the coil spring may be also formed on the slider 4.

### Fifth embodiment

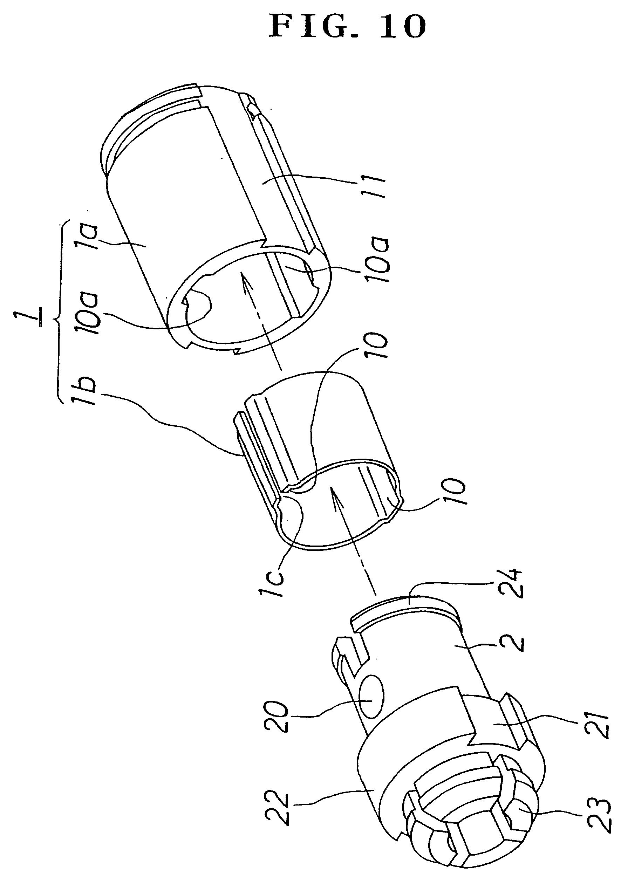

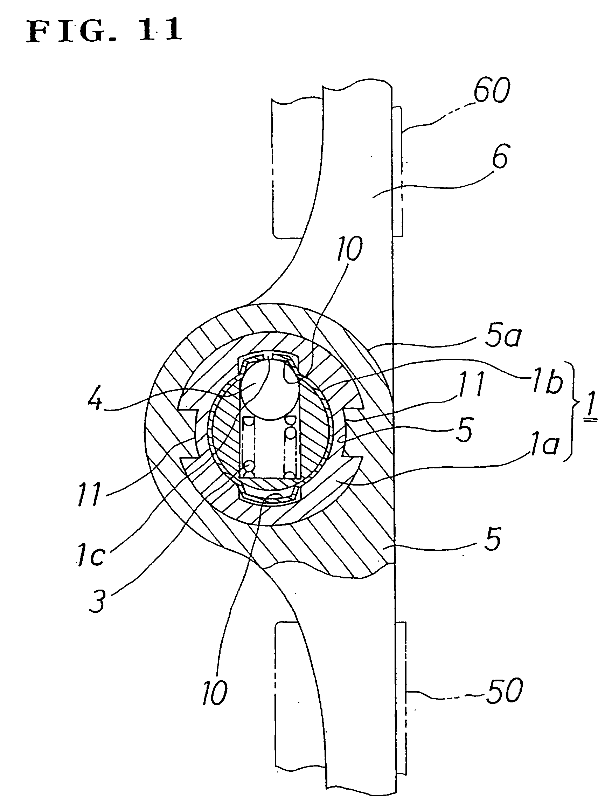

A description will now be given of a hinge in the fifth embodiment according to the present invention with reference to Figs. 10 and 11.

The bearing body 1 is composed of a body 1a made of synthetic resin having conductivity and an interior sheet 1b inserted into the body 1a. The interior sheet 1b is made of an elastic metal sheet such as a thin stainless steel sheet formed in a substantially cylindrical shape through a slit part 1c.

Each slider holding part 10 on the inner surface of the bearing body 1 is formed in the shape of an axial groove having a width slightly smaller than the diameter of the slider 4 formed by a ball. The inner surface part of the cylindrical body 1a has grooves 10a, 10a at positions corresponding to the slider holding parts 10 of the interior sheet 1b.

When a stainless steel sheet of a specified thickness or less is used for the material of the interior sheet 1b, the carbonitriding process of the stainless steel sheet is preferably required to provide higher wear resistance for the slider 4.

One of the groove-shaped slider holding parts 10, 10 of the interior sheet 1b has the slit part 1c for butting, and the interior sheet 1b, when mounted to the inside of the body 1a, makes close contact with the body 1a through circumferential expansion by its elasticity.

In the hinge in the fifth embodiment, when the second flap body 6 is moved pivotally by 180 degrees about the first flap body 5, the slider 4 is held with the groove-shaped slider holding part 10 for clicking the flap body 6.

While the spring housing hole 20 of the shaft 2, the coil spring 3 and the slider 4 are respectively limited in number to one, it is to be understood that two sets of spring housing holes, coil springs and sliders are also available, similarly to the hinge in the fourth embodiment.

Other constitution, operation and effects of the hinge in the fifth embodiment are similar to those of the hinge in the fourth embodiment, and hence, their description will be omitted.

In the hinge in the fifth embodiment, the pin for guiding the coil spring 3 so as to be externally fitted thereto may be also formed on the slider 4. Further, it is possible to operate the hinge in the fifth embodiment similarly to the hinge in the second or third embodiment by setting the width of the groove as the slider holding part 10 similarly to the hinge in the second or third embodiment.

### Sixth embodiment

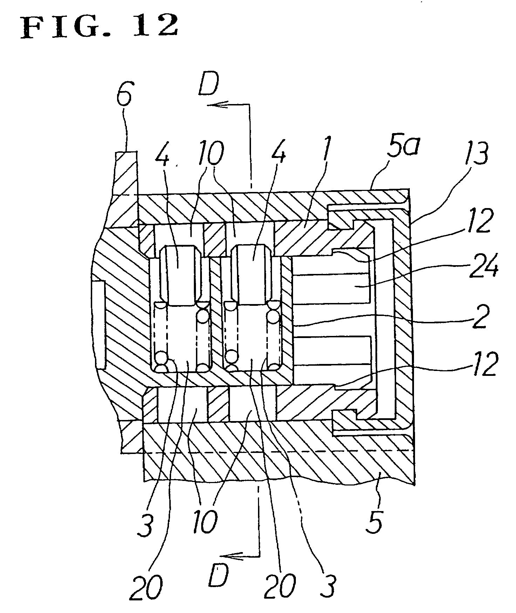

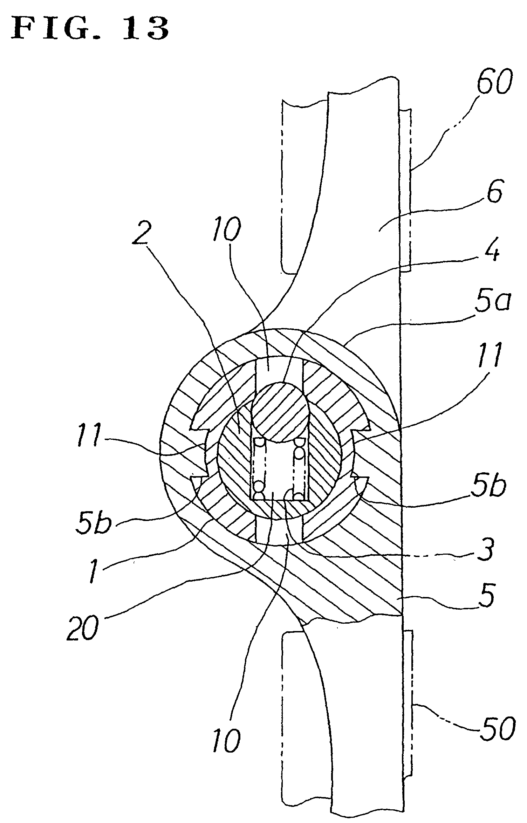

A description will now be given of a hinge in the sixth embodiment according to the present invention with reference to Figs. 12 and 13.

The hinge in the sixth embodiment is substantially similar in basic structure to the hinge in the fourth embodiment, except that the slider 4 is formed by a roller (a cylindrical roller in this embodiment) made of steel or like hard material and having an axis placed in parallel to the axis of the shaft 2, in place of the ball.

The opposite circumferential edges of the slider 4 formed by the roller are chamfered enough for the slider to smoothly slide along the inner surface of the bearing body 1.

The slider holding part 10 is formed in the shape of a circular hole slightly smaller in diameter than the roller forming the slider 4.

According to the hinge in the sixth embodiment, the slider 4 is formed by the short cylindrical roller placed in parallel to the axis of the shaft 2, and the slider 4 and the inner surface of the bearing body 1 make line-contact with each other. Thus, the inner surface of the bearing body 1 permits relatively less wear.

Other constitution, operation and effects of the hinge in the sixth embodiment are substantially similar to those of the hinge in the fourth embodiment, and hence, their description will be omitted.

In the hinge in the sixth embodiment, the slider holding part 10 may be also formed in the shape of the groove similarly to the fifth embodiment. Further, the pin for guiding the coil spring 3 may be also formed on the slider 4.

### Other embodiments

The slider 4 is not limited in shape to the rod having the substantially semicircular or conical section, the ball and the short roller as illustrated in the above embodiments. Thus, a slider of any other shape is also available, if only satisfying that its tip end as the slide part relatively to the inner surface of the bearing body 1 has a semicircular section (a semicircular section crossing at right angles with the axial core of the shaft 2).

In case of forming the holes as the slider holding parts 10 in the outer surface part of the bearing body 1 when the ball or roller is used as the slider 4, a slit-like hole formed axially in the bearing body 1 and having a width slightly smaller than the diameter of the slider 4 is also available, in place of the circular hole. The relative operation of the slider holding part 10 to the slider 4 in the above case is substantially similar to that in case of forming the slider holding part 10 in the shape of the groove.

Since the mounting parts 11, 21 of the bearing body 1 and the shaft 2 will be good enough, if permitting mounting of the bearing body 1 and the shaft 2 to the flap bodies, any constitution other than the groove described the above is also available.

The angle of the slider holding parts 10 with each other on the same circumference is properly set according to the designed range of pivotal motion of the first flap body 5 and the second flap body 6.

### POSSIBILITY OF INDUSTRIAL UTILIZATION

According to the hinge of the present invention, the friction part is formed by the slider 4 and the inner surface of the bearing body 1, permitting an increase in friction part length structurally. Thus, the hinge of the present invention may act the spring pressure in the direction of pivotal motion of the flap bodies more efficiently.

Further, since the hinge is structured to act the pressure of the coil spring 3 on the inner surface part of the bearing body 1 through the slider 4, there is an advantage to using a plurality of springs for more increase in braking force and clicking force.

## Claims

1. A hinge, comprising:
a bearing body 1 having, at its outer part, mounting parts 11 for a first flap body 5, and a wear-resistant inner surface having slider holding parts 10, 10 at positions spaced at an interval of a specified angle on the same circumference of the inner surface part;
a shaft 2 having, at one end, mounting parts 21 for a second flap body 6, while being inserted into the bearing body 1 in an anti-slipped state so as to be capable of relative turning, and also having a spring housing hole 20 having one end opened to an outer surface part so as to pass through an orbit crossing at right angles with an axial core and including said slider holding part 10 at the time of relative turning;
a coil spring 3 inserted into said spring housing hole 20; and
a slider 4 energized by said coil spring 3 so as to be pressed against the inner surface of said bearing body 1 through said spring housing hole 20, and having wear-resistance at least at the tip end making contact with the inner surface of said bearing body 1, while being capable of engagement with or disengagement from said slider holding part 10 when said bearing body 1 is turned relatively to the shaft 2.

2. A hinge according to claim 1, wherein said slider 4 has a spring guide pin 40 for mounting said coil spring 3 so as to be externally fitted to the pin.

3. A hinge according to claim 1, wherein a hard ball is used as said slider 4.

4. A hinge according to claim 1, wherein a hard roller having an axis placed in parallel to an axis of said shaft 2 is used as said slider 4.

5. A hinge according to claim 2, wherein said slider 4 has a semicircular section orthogonal to the axial direction of the tip end making contact with the inner surface of the bearing body 1, and makes contact with the inner surface of said bearing body 1 in a part other than said slider holding parts 10 continuously in the axial direction over a specified length.

6. A hinge according to claim 1, 2 or 5, wherein a contacting part of said slider 4 with the coil spring 3 is formed in the shape of a plane.

7. A hinge according to any one of claims 2 to 6, wherein said slider holding part 10 is formed in the shape of a hole opened to the outer circumference.

8. A hinge according to claim 7, wherein said pair of slider holding parts 10 include a plurality of pairs of slider holding parts axially formed so as to be located in the same circumferential direction, said spring housing hole 20 includes a plurality of spring housing holes axially formed so to as to face in the same circumferential direction correspondingly to said slider holding parts 10, and the coil spring 3 and the slider 4 are housed in each of said spring housing holes 20.

9. A hinge according to any one of claims 2 to 6, wherein said slider holding part 10 is formed in the shape of an axial groove on the inner surface of the bearing body 1.

10. A hinge according to claim 9, wherein the groove formed as said slider holding part 10 has a concave semicircular section.

11. A hinge according to claim 9 or 10, wherein said spring housing hole 20 includes a plurality of spring housing holes axially formed so as to face in the same circumferential direction, and the coil spring 3 and the slider 4 are placed in each of said spring housing holes 20.

12. A hinge according to claim 5, wherein said slider holding part 10 is formed in the shape of a groove having a concave semicircular section, said spring housing hole 20 includes a plurality of spring housing holes axially formed so as to face in the same circumferential direction, the coil spring 3 is housed in each of said spring housing holes 20, said slider 4 has an axial length enough to extend across the spring housing holes 20, and the spring housing holes 20 are communicated with each other through each one end opened in the circumferential direction to such an extent that the tip end of the slider 4 is hidden when being in contact with a part of said bearing body 1 other than said slider holding parts 10.

13. A hinge according to claim 12, wherein a contacting part of said slider 4 with the coil spring 3 is formed in the shape of a plane.

14. A hinge according to any one of claims 1 to 13, wherein said bearing body 1 is composed of a synthetic resin body 1a and a metal interior sheet 1b fixedly mounted to the inner surface of the body 1a.

15. A hinge according to any one of claims 1 to 14, wherein a transmitter-side casing 50 of a portable mobile telephone is mounted to one of the first flap body 5 and the second flap body 6, while a receiver-side casing 60 of the portable mobile telephone is mounted to the other, and the bearing body 1 and the shaft 2 have conductivity.
